(19)

**Europäisches Patentamt**
**European Patent Office**
**Office européen des brevets**

(11) **EP 1 744 301 A1**

(12) **EUROPEAN PATENT APPLICATION**

(43) Date of publication:
**17.01.2007 Bulletin 2007/03**

(51) Int Cl.:
***G10H 1/00*** *(2006.01)*      *G10H 1/36* *(2006.01)*

(21) Application number: **06252817.9**

(22) Date of filing: **31.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.07.2005 KR 2005064450**

(71) Applicant: **Samsung Electronics Co., Ltd.**
**Suwon-si, Gyeonggi-Do (KR)**

(72) Inventors:
  • **Choi, Eun-seok**
    **Anyang-si**
    **Gyeonggi-do (KR)**
  • **Kim, Dong-yoon**
    **Seodeaemun-gu**
    **Seoul (KR)**

  • **Bang, Won-chul**
    **Seongnam-si**
    **Gyeonggi-do (KR)**
  • **Cho, Sung-jung**
    **249-403, Hwanggol-maeul 2-danji**
    **Suwon-si**
    **Gyeonggi-do (KR)**
  • **Cho, Joon-kee**
    **Yongin-si**
    **Gyeonggi-do (KR)**
  • **Hwang, Kwang-il**
    **Yeongtong-gu**

    **Suwon-si**
    **Gyeonggi-do (KR)**

(74) Representative: **Greene, Simon Kenneth**
    **Elkington and Fife LLP,**
    **Prospect House,**
    **8 Pembroke Road**
    **Sevenoaks TN13 1XR (GB)**

(54) **Method, apparatus, and medium for controlling and playing sound effect by motion detection**

(57)    A method, apparatus, and medium for outputting multimedia data such as music is disclosed, which can recognize motion of a specified device using an inertial sensor, and mix sound that corresponds to the recognized motion with multimedia data in order to output the multimedia data mixed with the sound. The apparatus for controlling and playing a sound effect by motion detection includes a media playback unit for reading multimedia data and playing a sound signal; a motion sensor for detecting motion of the apparatus and generating a sensor signal that corresponds to the detected motion; a pattern recognition unit for receiving the generated sensor signal and recognizing motion of the apparatus based using a specified standard of judgment; a sound-effect-playback unit for playing the sound effect based on the result of recognition; and an output unit for outputting the played sound signal and the sound effect.

**FIG. 2**

EP 1 744 301 A1

**Description**

The present invention relates to a method for outputting multimedia data, and more particularly to a method, apparatus and medium which can recognize a motion pattern of a specified device using an inertial sensor, and mix sound that corresponds to the recognized motion pattern with multimedia data in order to output the multimedia data mixed with the sound.

An angular velocity sensor is a sensor for detecting the angular variation of a specified device and for outputting a sensor signal corresponding to the detected angular variation. An acceleration sensor is a sensor for detecting the velocity variation of a specified device and for outputting a sensor signal corresponding to the detected velocity variation. Research has been conducted for devices capable of recognizing the motion of a specified device in a three-dimensional space using an inertial sensor (e.g., an angular sensor and/or an acceleration sensor), and capable of operating to input a character, a symbol, or a specified command that corresponds to the recognized motion pattern.

User motion patterns differ slightly. If a user does not move in a specific manner (motion pattern), a character or a control command that does not match the user's intention may be inputted to a motion-based input device. In the conventional motion-based input device, the user cannot recognize the type and content of character or control command that is inputted to the device. The user can recognize the inputted character or control command only by checking the result of the input after the character or control command has been inputted. Accordingly, technologies for recognizing a user's various motion patterns more accurately have been recently developed.

Meanwhile, with the wide spread distribution of multimedia due to an explosive increase of computers and networks, many portable devices now have a function for playing music of various formats (e.g., MP3, and WAV). However, a user can only listen to music stored therein. A technology has not yet been proposed that enables the user to generate various sound effects during the playing of music. Such technology not only enables the user to listen to the stored music, but also makes it possible to incorporate sound effects in the stored music, thereby allowing the user to compose music.

As a related conventional technology, Japanese Unexamined Patent Publication No. 1999-252240 discloses a system that can adjust the sound volume of a receiver according to the shaking of a mobile phone by detecting the shaking of the mobile phone. However, this is no more than a technology for merely controlling one function of the mobile phone according to the user's motion.

Further, Korean Unexamined Patent Publication No. 2005-049345 discloses a playback-mode control apparatus and method, which can analyze a user's motion based on biometric information and control a playback mode for content in response to the user's motion. However, this technology merely uses the user's motion information as a means for controlling the playback mode, and thus it is different from the mixing of sound effects with music according to the user's motion.

Accordingly, a method and apparatus, which can detect a user's motion using a conventional motion detection technology when music is played in a portable device having a motion sensor, and which can mix a predetermined sound effect or beat with the music according to the user's motion in order to output the music mixed with the sound effect, is needed.

Additional aspects, features, and/or advantages of the invention will be set forth in part in the description which follows and, in part, will be apparent from the description, or may be learned by practice of the invention.

Accordingly, the present invention solves the above-mentioned problems occurring in the prior art. In one aspect, the present invention provides a method and apparatus for mixing in real time multimedia played in a portable device with a sound effect that corresponds to a user's motion and outputting the multimedia mixed with the sound effect.

Another aspect of the present invention provides a method for expressing the sound effect in diverse manners.

An aspect of the present invention provides an apparatus for controlling and playing a sound effect by motion detection, according to the present invention, which comprises a media playback unit for reading multimedia data and playing a sound signal; a motion sensor for detecting motion of the apparatus and generating a sensor signal that corresponds to the detected motion; a pattern recognition unit for receiving the generated sensor signal and recognizing a motion pattern of the apparatus based on a specified standard of judgment; a sound-effect-playback unit for playing the sound effect based on the result of recognition; and an output unit for outputting the played sound signal and the sound effect.

In another aspect of the present invention, there is provided a method for controlling and playing a sound effect by motion detection, which comprises the steps of (a) reading multimedia data and playing a sound signal; (b) detecting motion of a sound effect controlling and playing apparatus and generating a sensor signal that corresponds to the detected motion; (c) receiving the generated sensor signal and recognizing a motion pattern of the apparatus based on a specified standard of judgment; (d) playing the sound effect based on the result of recognition; and (e) outputting the played sound signal and the sound effect.

In another aspect of the present invention, there is provided at least one computer readable medium storing instructions that control at least one processor to perform a method for controlling and playing a sound effect by motion detection, the method comprising (a) reading multimedia data and playing a sound signal; (b) detecting motion of an apparatus that controls and plays sound effects, and generates a sensor signal that corresponds to the detected motion; (c) receiving the generated sensor signal and recognizing motion of the apparatus based on a specified standard of judgment; (d) playing the sound effect based on the result of the recognition; and (e) outputting the played sound signal and the sound effect.

These and/or other aspects, features and advantages of the invention will become apparent and more readily appreciated from the following description of exemplary embodiments, taken in conjunction with the accompanying drawings of which:

FIG. 1 is a view illustrating the outer construction of a portable device, which mixes a sound effect that is generated by a user's motion with audio data during the playback of the audio data, according to an exemplary embodiment of the present invention;

FIG. 2 is a block diagram of a portable device according to an exemplary embodiment of FIG. 1;

FIG. 3 is a hard-wired block diagram of a portable device according to an exemplary embodiment of FIG. 2;

FIG. 4 is a view illustrating a three-dimensional coordinate system of a portable device according to an exemplary embodiment of the present invention;

FIGS. 5A and 5B are graphs illustrating a three-axis acceleration signal and a motion recognition signal;

FIGS. 6 through 9 are views illustrating examples of sound-effect playback settings; and

FIG. 10 is a flowchart illustrating a method for controlling and playing a sound effect by motion detection according to an exemplary embodiment of the present invention.

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

The present invention provides a method and apparatus which analyzes a user's biometric information using a motion sensor installed in a portable device that detects the motion of the portable device if the portable device is shaking in specified directions, mixes multimedia data that is currently being played with a stored sound effect, and outputs the multimedia data mixed with the sound effect. The sound effect may be a beat, and may have the same format as the multimedia data or a different format.

Accordingly, a user can simply listen to music, independently create a beat to be initiated by a user's motion, or simultaneously perform both operations according to the user's taste. This is different from the conventional technology, which simply detects the motion and inputs a character or a control command.

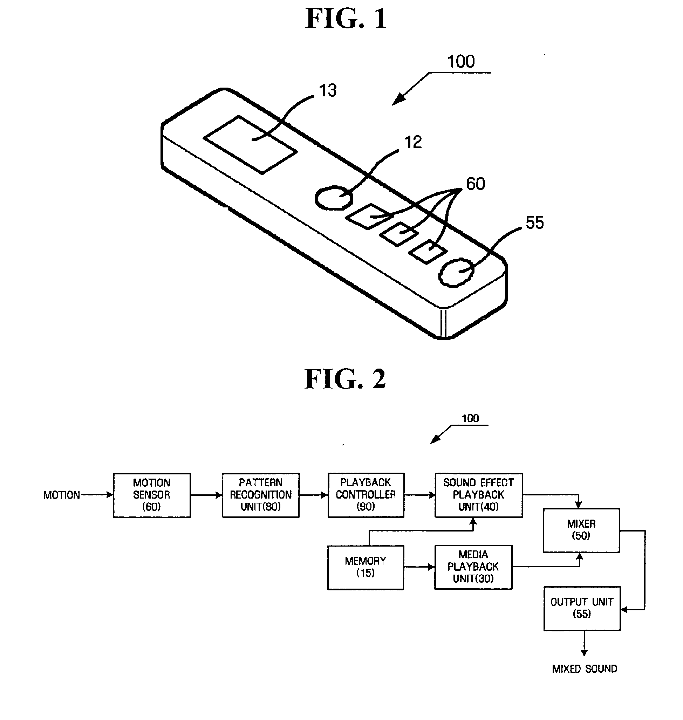

FIG. 1 is a view illustrating the outer construction of a portable device 100 according to an exemplary embodiment of the present invention, in which a sound effect that is initiated by motion occurrence during the playback of multimedia data is mixed with the multimedia data. The portable device 100 may include a display unit 13 provided on an outer surface of the portable device for displaying various kinds of information (e.g., the present status of the portable device) through an LCD or LED. The portable device 100 may also include motion sensors 60 for detecting the motion of the portable device 100 caused by a user's motion, a key input unit 12 for receiving a user's command input via a key, and an output unit 55 for outputting mixed sounds to a user.

FIG. 2 is a logic block diagram of the portable device according to an exemplary embodiment of FIG. 1. The portable device 100 may include a motion sensor 60, a pattern-recognition unit 80, a playback controller 90, a sound-effect playback unit 40, a media-playback unit 30, a memory 15, a mixer 50, and an output unit 55.

The motion sensor 60 detects the motion of the portable device 100, and outputs a sensor signal corresponding to the detected motion. The pattern recognition unit 80 recognizes a motion pattern of the portable device 100 based on the sensor signal outputted from the motion sensor 60.

The playback controller 90 controls the sound-effect-playback unit 40 to play a specified sound effect based on the recognized motion pattern. The sound-effect-playback unit 40 generates a sound signal corresponding to the motion pattern recognized by the pattern recognition unit 80 under the control of the playback controller 90. The sound-effect playback unit 40 may generate the sound signal using a sound effect signal stored in a memory 15 under the control of the playback controller 90.

The media playback unit 30 restores multimedia data stored in a memory 15 through a decoder (e.g. a codec) to thus generate an analog sound signal. The mixer 50 mixes the sound effect outputted by the sound-effect-playback unit 40 with the sound signal outputted by the media playback unit 30 in order to output a single mixed sound signal.

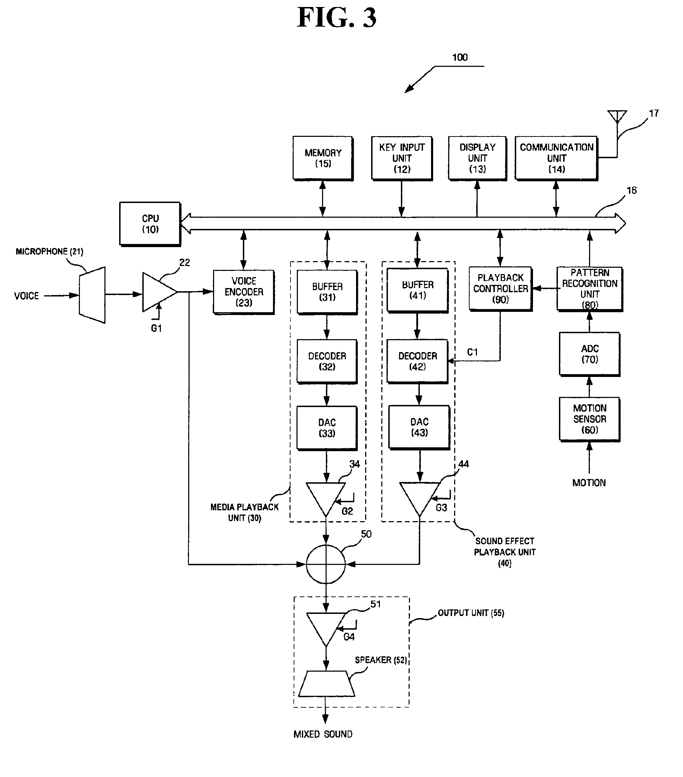

FIG. 3 is an exemplary embodiment of a hard-wired block diagram of a portable device 100 of FIG. 2. As illustrated in FIG. 3, elements of the portable device 100 may be electrically connected to a CPU 10 and the memory 15 through a bus 16. The memory 15 may be implemented in the form of a read only memory (ROM) for storing programs executed by the CPU 10, and a random access memory (RAM) for storing various kinds of data and having a battery backup. The RAM may be a flash memory or a hard disk that is both readable and writable, and is capable of preserving data even in a power-off state. Other types of memory or storage devices may also be used. The memory 15 stores at least one set of multimedia data and one set of sound signal data.

The key input unit 12 converts a key input from a user into an electric signal, and may be implemented in the form of a keypad or a digitizer. The display unit 13 may be implemented by light-emitting elements such as LCDs and LEDs. A communication unit 14 is connected to an antenna 17, transmits signals and data through the antenna 17 by carrier modulation, and demodulates the signals and data received via the antenna 17.

A microphone 21 converts an input voice into an analog sound signal, and an amplifier 22, the gain of which is controlled by a gain control signal G1, amplifies the converted analog sound signal. The amplified signal is then input to a voice encoder 23 and a mixer 50. The voice encoder 23 converts the amplified signal into digital data, compresses the digital data, and transmits the compressed data to the communication unit 14.

The media playback unit 30 may include a buffer 31, a decoder 32, a DAC 33, and an amplifier 34. An example of buffer 31 is a first-in first-out (FIFO) type buffer, which receives and temporarily stores multimedia data stored in the memory 15. The decoder 32 decompresses the multimedia data temporarily stored in the buffer 31 to restore the original sound signal (video or images may also be restored in the restoration process). The decoder 32 may support diverse formats. The decoder may be an MPEG 1, 2, 4, JPEG, or an MPEG Layer-3 (MP3) codec.

DAC 33 is a digital-to-analog converter, which converts the decompressed sound signal into an analog sound signal. The amplifier 18 amplifies the analog sound signal according to a gain control signal G2.

The sound-effect playback unit 40 generates an analog sound signal from the sound effect signal stored in the memory 15 under the control of the playback controller 90. The sound effect signal may be stored in a separate memory instead of the memory 15. The sound effect signal may have the same format as the multimedia data, or it may have a different format. If the sound effect signal is also in compressed form, the sound-effect-playback unit 40 may include a buffer 41, a decoder 42, a DAC 43, and an amplifier 44, in the same manner as the media playback unit 30.

The mixer 50 mixes the sound signal outputted from the media playback unit 30 with the sound signal outputted from the sound-effect-playback unit 40. The mixer 50 may also mix the sound signals inputted through the microphone 21 and the amplifier 22. As a result, the user can mix his/her voice with the audio data in addition to mixing in the sound effect. For example, the user can simultaneously output or record his voice while inserting the beat into the played music. Since diverse algorithms related to the mixing of a plurality of analog signals through the mixer 50 are known in the prior art, a detailed explanation thereof has been omitted.

The sound mixed by the mixer 50 (hereinafter, referred to as "mixed sound") may be outputted through the output unit 55. The output unit 55 may include an amplifier 51, the gain of which is controlled according to a main gain control signal G4, and a speaker 52 for converting the input electric sound signal into actual sound.
The motion sensor 60 detects the motion of the portable device 100, and outputs a sensor signal corresponding to the detected motion. The motion sensor 60 may include an acceleration sensor, an angular velocity sensor, a geomagnetic sensor, or others, or a combination thereof. The angular velocity sensor detects the angular velocity of the sound playback device, i.e., the motion of the device rightward, leftward, upward, downward, clockwise, and counterclockwise, and generates a sensor signal value corresponding to the detected angular velocity. In other words, the angular velocity sensor detects the angular velocity of the playback device.

The acceleration sensor detects the acceleration of the playback device, i.e., the speed variation of the playback device, and generates a sensor signal corresponding to the detected acceleration. The acceleration of the playback device can be recognized through the acceleration sensor. If the motion sensor 60 is constructed of a combination of the angular velocity sensor and the acceleration sensor, the motion sensor can detect both the angular velocity and the acceleration of the playback device, and can generate sensor signals corresponding to the detected angular velocity and the acceleration. The motion sensor 60 may employ the acceleration sensor, the angular velocity sensor, or others. However, the present invention will be described with reference to the acceleration sensor.

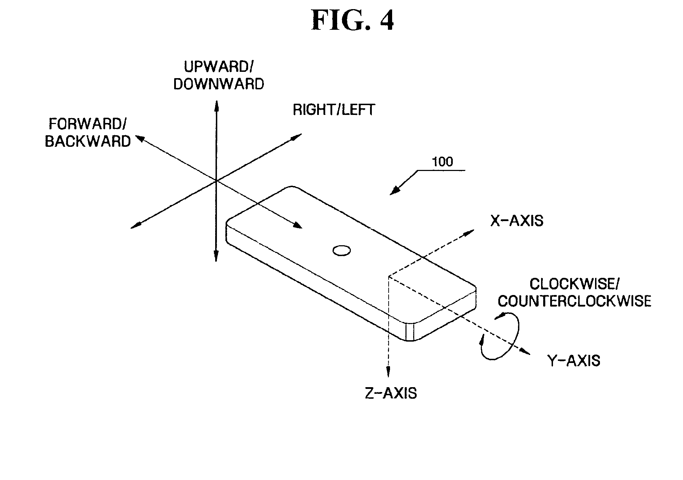

FIG. 4 is a view illustrating a three-dimensional coordinate system of a portable device according to an exemplary embodiment of the present invention. As illustrated in FIG. 4, the motion-based playback device has motion patterns in right/left, upward/downward, and forward/backward directions. In order to detect the three motion patterns, three acceleration sensors are installed on x, y, and z axes of a coordinate system of the portable device 100. The acceleration sensor on the x axis detects right/left motions of the playback device. The acceleration sensor on the y axis detects forward/backward motions of the playback device. The acceleration sensor on the z-axis detects upward/downward motions of the playback device. The acceleration sensors may be part of motion sensor 60.

Referring again to FIG. 3, the sensor signal outputted from the motion sensor 60 is an analog signal corresponding to the acceleration of the motion-based playback device, and an analog-to-digital converter (ADC) 70 converts the analog sensor signal outputted from the motion sensor 60 into a digital sensor signal. The digital sensor signal from the ADC 70 is provided to the pattern recognition unit 80, which in turn performs an algorithm for analyzing the motion pattern of the playback device using the provided digital sensor signal. The pattern recognition unit 80 can recognize the occurrence of motion, for example, at the time point when the sensor signal value exceeds a specified critical value.

According to this algorithm, the direction and amount of motion of the portable device 100 can be recognized. The details of this algorithm will be described later.

The playback controller 90 controls the sound-effect playback unit 40 to play the sound effect according to a specified setup (hereinafter, referred to as "sound-effect playback setup") by the motion pattern provided by the pattern recognition unit 80. The details of the sound-effect playback setup will be described later.

The elements shown in FIG. 3, as used herein, may be, but are not limited to, software or hardware components, such as a Field Programmable Gate Arrays (FPGAs) or Application Specific Integrated Circuits (ASICs), which perform certain tasks. The components may advantageously be configured to reside in an addressable storage medium and configured to execute on one or more processors. The functionality provided by the components may be implemented by several components or one component.

Hereinafter, a pattern recognition process, which is performed by acceleration sensors in the pattern recognition unit 80, will be explained in the following. A voltage signal corresponding to the size of the motion of the playback device is generated by the motion sensor 60, and acceleration sensor signal values ($A_{bx}$, $A_{by}$, $A_{bz}$) are generated through Equation (1):

$$A_{bx} = S_{bx}*(V_{bx} - V_{box})$$

$$A_{by} = S_{by}*(V_{by} - V_{boy}) \qquad \ldots\ldots (1)$$

$$A_{bz} = S_{bz}*(V_{bz} - V_{boz})$$

Here, $A_{bx}$, $A_{by}$, and $A_{bz}$ denote the acceleration sensor signal values of the playback device, which are measured on the respective axes (x, y, and z axes) of the coordinate system of the playback device, and $S_{bx}$, $S_{by}$, and $S_{bz}$ denote sensitivities of the respective axes of the coordinate system of the playback device. Also, $V_{bx}$, $V_{by}$, and $V_{bz}$ denote the measured values generated by the acceleration sensors arranged on the respective axes of the coordinate system of the playback device, and $V_{box}$, $V_{boy}$, and $V_{boz}$ denote the measured values when the acceleration values of the acceleration sensors arranged on the respective axes of the coordinate system of the playback device are "0".

The pattern recognition unit 80 compares the sensor signal values with the critical values ($C_{bx}$, $C_{by}$, and $C_{bz}$) and monitors the point when the sensor signal values exceed the specified critical values. At the point when the sensor signal values exceed the critical values, acceleration of the playback device in a specified direction is recognized. Upward/downward, right/left, or forward/backward acceleration of the playback device are recognized as follows.

In the case of recognizing the right/left acceleration of the playback device, a time point ($k_x$) when the

sensor signal value changes from $|A_{bx}(k_x-1)| \leq C_{bx}$ to $|A_{bx}(k_x)| > C_{bx}$ is detected. The right/left acceleration of the playback device is recognized using the acceleration sensor located on the x axis of the coordinate system of the playback device.

In addition, in the case of recognizing the upward/downward acceleration of the playback device, a time point ($k_z$) when the sensor signal value changes from $|A_{bz}(k_z-1)| \leq C_{bz}$ to $|A_{bz}(k_z)| > C_{bz}$ is detected. The upward/downward acceleration of the playback device is recognized using the acceleration sensor located on the z axis of the coordinate system of the playback device.

Further, in the case of recognizing the forward/backward acceleration of the playback device, a time point ($k_y$) when the sensor signal value changes from $|A_{by}(k_y-1)| \leq C_{by}$ to $|A_{by}(k_y)| > C_{by}$ is detected. The forward/backward acceleration of the playback device is recognized using the acceleration sensor located on the y axis of the coordinate system of the playback device. Here, $k_x$, $k_y$, and $k_z$ denote the present discrete time values, and $k_x-1$, $k_y-1$, and $k_z-1$ denote the previous discrete time values.

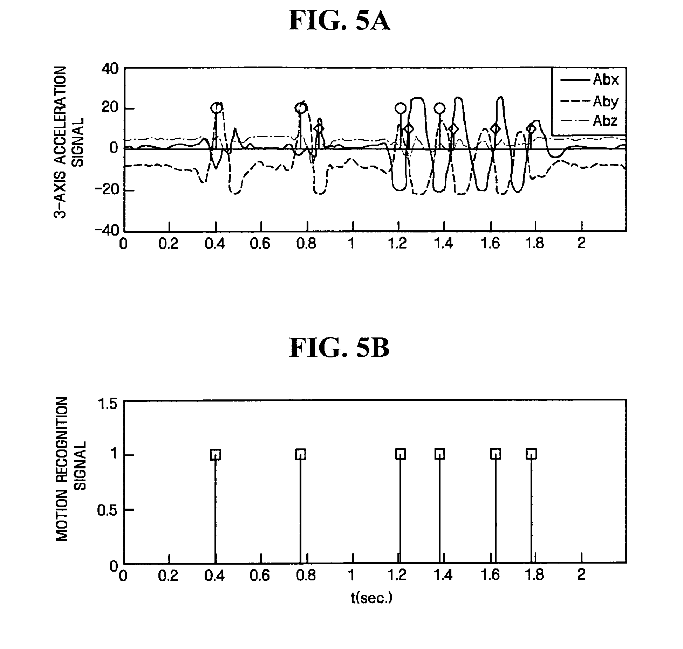

It is assumed that during the playback of the multimedia by the media playback unit 30, 3-signals acceleration signals, as illustrated in FIG. 5A, are produced by the motion sensor 60. In the graph of FIG. 5A, points that exceed critical values on respective axes are marked with circular symbols or diamond symbols. The graph of FIG. 5B shows the result of motion recognition conducted via the pattern recognition unit 80. However, it can be seen that 9 points that exceed the critical values are indicated in the graph of FIG. 5A, but 6 points are actually recognized as motion in the graph of FIG. 5B. This is because if plural points that exceed the critical values are included in a specified time period, the corresponding points are recognized as one point. The recognized point among the points in the specified time point is the first one. A critical value is provided for each time period because it is not preferable to repeat the output of the sound effect in a very short time. Of course, as the critical value of the time period increases, the number of recognized points decreases, and vice versa.

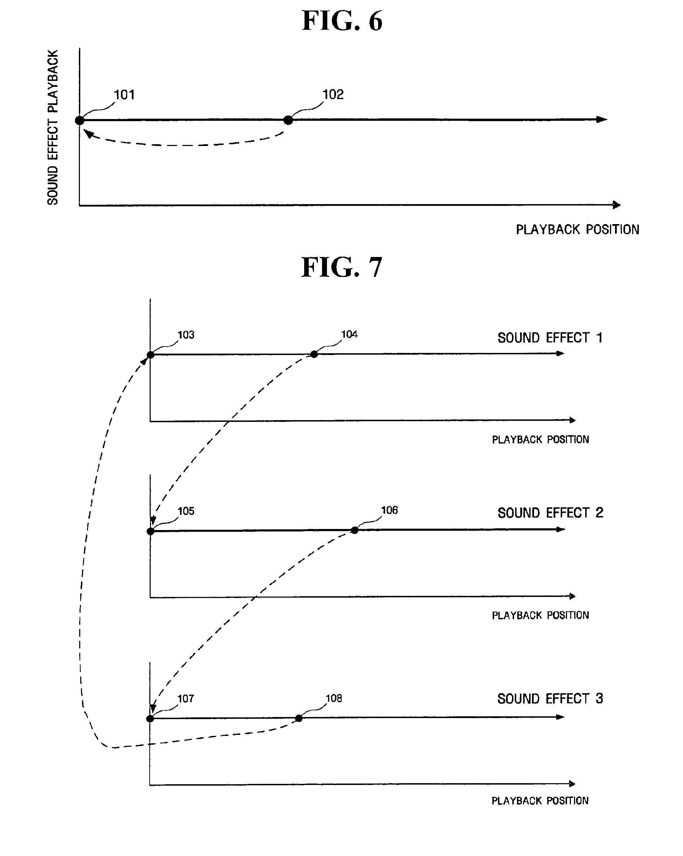

Hereinafter the sound-effect playback setup required for the playback controller 90 to control the sound-effect-playback unit 40 will be explained with reference to FIGs. 6 to 9.

FIG. 6 illustrates an example where if motion is recognized during the multimedia playback, a sound effect is played, and if motion is recognized again at a specified point 102 during the playback of the sound effect, the sound effect is played again starting from the initial point 101. If the sound effect is a beat, the beat will be repeatedly outputted whenever a user moves. Of course, if there is no motion during the playback of the sound effect, the sound effect signal will be played to completion.

FIG. 7 illustrates an example where if motion is recognized once, plural sound effects are played. In the first recognition of motion, sound effect 1 is played starting from its initial point 103, and if motion is recognized once more at a specified point 104, sound effect 2 is played starting from its initial point 105. Further, if motion is recognized again at a specified point 106, sound effect 3 is played starting from its initial point 107. As a result, if it is assumed that a total of three sound effects are used, sound effect 1 is played again when motion is recognized again during the playback of sound effect 3.

In the case where plural sound effects are stored in the memory 15 as described above, the playback controller 90 changes indexes of the sound effects, and sends the corresponding sound effects provided by the memory 15 to the sound-effect playback unit 40.

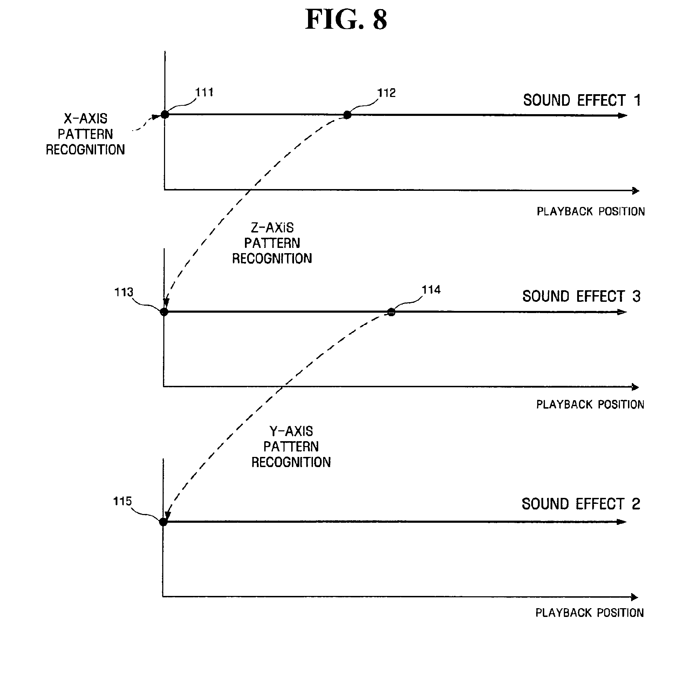

FIG. 8 illustrates an example where different sound effects are outputted for the respective axes. Here, it is assumed that the x, y, and z axes correspond to sound effects 1, 2, and 3, respectively. When the x-axis motion is recognized during the multimedia playback, sound effect 1 is played starting from its initial point 111. When the z-axis motion pattern is recognized at a specified point 112 during the playback of sound effect 1, sound effect 3 is played starting from its initial point 113. Similarly, when the y-axis motion pattern is recognized at a specified point 114 during the playback of sound effect 3, sound effect 2 is played starting from its initial point 115.

The example of FIG. 8 corresponds to the case where separate sound effects are designated to the respective axes. Thus, the user can insert diverse sound effects into the audio data being played according to the user's taste. For example, the user may designate a drum sound, guitar sound, and piano sound for x-, y-, and z-axes, respectively, and produce a diversity of sound effects according to the recognized directions of motion.

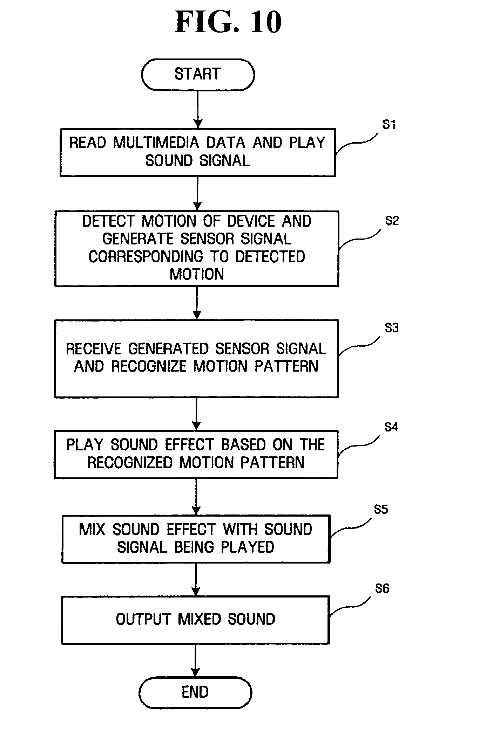

FIG. 10 is a flowchart illustrating a method for controlling and playing sound effects by motion detection according to an exemplary embodiment of the present invention.

First, the media playback unit 30 reads multimedia data and plays a sound signal S1. The motion sensor 60 detects the motion of the playback device during the playback of the sound signal, and generates a sensor signal corresponding to the detected motion S2. The pattern recognition unit 80 receives the generated sensor signal and recognizes the motion of the playback device based on a specified standard of judgment S3. The sound-effect-playback unit 40 plays a sound effect based on the result of the recognition S4, and the mixer 50 mixes the sound effect with the sound signal being played to generate the mixed sound signal S5. The output unit 55 then outputs the mixed sound signal via the speaker S6.

In operation S6, the output unit 55 can perform the sub-steps of controlling the gain of the mixed sound signal according to the main gain-control signal via the amplifier 51, and can convert the mixed sound signal, the gain of which is controlled, into actual sound through the speaker 52.

The flowchart of FIG. 10 may further include the operations of converting the voice inputted via the microphone 21 into an analog sound signal, and providing the same to the mixer 50.

In operation S1, the media playback unit 30 may perform the sub-operations of temporarily storing multimedia data using the buffer 31, and decompressing the multimedia data temporarily stored in the buffer 31 to restore to the original sound signal using the decoder 32.

In operation S4, the sound-effect-playback unit 40 may perform the sub-operations of temporarily storing sound effect data using the buffer 41, and decompressing the sound effect data temporarily stored in the buffer 41 to restore to the original sound effect using the decoder 42.

In operation S2, the motion can be detected by the acceleration sensor, the angular velocity sensor, or a combination thereof.

In operation S3, the pattern recognition unit 80 can recognize the occurrence of motion at the time point when the sensor signal exceeds a specified critical value. In addition, if plural points are recognized as the points of motion occurrence exist within a specified time period, the pattern recognition unit 80 can recognize them as a single motion.

The flowchart of FIG. 10 may further include the step of controlling the playback of the sound effect according to a specified sound-effect-playback setup using the playback controller 90 if the occurrence of motion is recognized.

Referring to FIG. 6, the sound-effect-playback setup is conducted such that if motion is recognized during the playback of a sound signal, a sound effect is played, and if motion is recognized during the playback of the sound effect, the sound effect is played again starting from its initial point.

Referring to FIG. 7, the sound-effect-playback setup is conducted such that whenever motion is recognized during the playback of a sound signal, a different sound is played.

Referring to FIG. 8, the sound-effect-playback setup is conducted such that if motion is recognized during the playback of a sound signal, the corresponding sound signal according to the axes indicated by the motion is played.

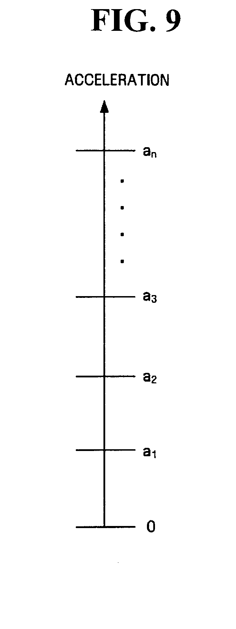

Referring to FIG. 9, the sound-effect-playback setup is conducted such that if motion is recognized during the playback of a sound signal, the magnitude of the sound signal increases according to the size of the motion.

In addition to the above-described exemplary embodiments, exemplary embodiments of the present invention can also be implemented by executing computer readable code/instructions in/on a medium, e.g., a computer readable medium. The medium can correspond to any medium/media permitting the storing and/or transmission of the computer readable code.

The computer readable code/instructions can be recorded/transferred in/on a medium in a variety of ways, with examples of the medium including magnetic storage media (e.g., floppy disks, hard disks, magnetic tapes, etc.), optical recording media (e.g., CD-ROMs, or DVDs), magneto-optical media (e.g., floptical disks), hardware storage devices (e.g., read only memory media, random access memory media, flash memories, etc.) and storage/transmission media such as carrier waves transmitting signals, which may include instructions, data structures, etc. Examples of storage/transmission media may include wired and/or wireless transmission (such as transmission through the Internet). Examples of wired storage/transmission media may include optical wires and metallic wires. The medium/media may also be a distributed network, so that the computer readable code/ instructions is stored/transferred and executed in a distributed fashion. The computer readable code/instructions may be executed by one or more processors.

As described above, the present invention is advantageous in that a user can insert in real-time sound effects or beats into the multimedia data being played by the portable device according to the user's taste, so that the user can compose music, in addition to the simply listening to the music.

Although a few exemplary embodiments of the present invention have been shown and described, it would be appreciated by those skilled in the art that changes may be made in these exemplary embodiments without departing from the principles of the invention, the scope of which is defined in the claims and their equivalents.

**Claims**

1. An apparatus for controlling and playing a sound effect by motion detection, the apparatus comprising:

    a media playback unit (30) arranged to read multimedia data and to play a sound signal;
    a motion sensor (60) arranged to detect motion of the apparatus and to generate a sensor signal that corresponds to the detected motion;
    a pattern recognition unit (80) arranged to receive the generated sensor signal and to recognize motion of the apparatus;
    a sound-effect-playback unit (40) arranged to play the sound effect based on the recognized motion; and
    an output unit (55) arranged to output the sound signal and the sound effect.

2. The apparatus as claimed in claim 1, further comprising a mixer (30) arranged to mix the sound effect with the sound signal, and to provide the mixed sound signal to the output unit (55).

3. The apparatus as claimed in claim 2, wherein the output unit (55) comprises:

    an amplifier (18) arranged to control a gain of the mixed sound signal according to a main gain-control signal; and
    a speaker arranged to convert the gain-controlled mixed sound signal into actual sound.

4. The apparatus as claimed in claim 1 further comprising:

    a microphone (21) arranged to convert an input voice into an analog sound signal; and
    a mixer (50) arranged to mix the sound signal, the sound effect, and the converted sound signal and to provide the mixed sound to the output unit (55).

5. The apparatus as claimed in any of claims 1 to 4, wherein the media playback unit (30) comprises:

    a first-in first-out (FIFO) type buffer (31) arranged to receive and to temporarily store multimedia data stored in a memory; and
    a decoder (32) arranged to decompress the multimedia data temporarily stored in the buffer (31) in order to restore to the original sound signal.

6. The apparatus as claimed in any preceding claim, wherein the sound-effect-playback unit (40) comprises:

    a first-in first-out (FIFO) type buffer (41) arranged to receive and to temporarily store sound-effect data stored in a memory; and
    a decoder (42) arranged to decompress the sound effect data temporarily stored in the buffer (41) to restore to the original sound effect.

7. The apparatus as claimed in claim 5 or 6, wherein the sound-effect data is in the MPEG Layer-3 (MP3) format.

8. The apparatus as claimed in any preceding claim, wherein the motion sensor is an acceleration sensor, an angular velocity sensor, or a combination thereof.

9. The apparatus as claimed in claim 8, wherein the pattern-recognition unit (80) is arranged to recognize the occurrence of motion at a point when the sensor signal exceeds a specified critical value.

10. The apparatus as claimed in claim 9, wherein if plural points recognized as points where separate motion has occurred are within a specified time period, the pattern-recognition unit (80) is arranged to consider them as a single motion.

**11.** The apparatus as claimed in claim 8, 9 or 10, further comprising a playback controller (90) arranged to control the playback of the sound effect according to a specified sound-effect-playback setup if the motion occurrence is recognized.

**12.** The apparatus as claimed in claim 11, wherein the sound-effect-playback setup is conducted such that if motion is recognized during the playback of the sound signal, the sound effect of sound data is played, and if motion is recognized during the playback of the sound effect, the sound effect is played again starting from its initial point.

**13.** The apparatus as claimed in claim 11, wherein the sound-effect-playback setup is conducted such that if motion is recognized during the playback of the sound signal, a sound signal different from the played sound signal is played.

**14.** The apparatus as claimed in claim 11, wherein the sound-effect-playback setup is conducted such that if motion is recognized during the playback of the sound signal, a corresponding sound signal according to an axes indicated by the motion is played.

**15.** The apparatus as claimed in claim 11, wherein the sound-effect-playback setup is conducted such that if motion is recognized during the playback of the sound signal, the magnitude of the sound signal increases according to the size of the motion.

**16.** A method for controlling and playing a sound effect by motion detection, comprising:

(a) reading multimedia data and playing a sound signal;
(b) detecting motion of a device that controls and plays sound effects, and generates a sensor signal that corresponds to the detected motion;
(c) receiving the generated sensor signal and recognizing motion of the device;
(d) playing the sound effect based on the recognized motion; and
(e) outputting the played sound signal and the sound effect.

**17.** The method as claimed in claim 16, further comprising the step of mixing the sound effect with the played sound signal, and providing the mixed sound signal to an output unit.

**18.** The method as claimed in claim 17, wherein the step (e) comprises:

controlling a gain of the mixed sound signal according to a main gain-control signal; and
converting the gain-controlled, mixed sound signal into actual sound.

**19.** The method as claimed in claim 16, further comprising:

converting an input voice into an analog sound signal; and
mixing the played sound signal, the sound effect, and the converted sound signal, and providing the mixed sound to an output unit.

**20.** The method as claimed in any of claims 16 to 19, wherein the step (a) comprises:

receiving and temporarily storing multimedia data stored in a memory; and
decompressing the multimedia data temporarily stored in a buffer in order to restore to the original sound signal.

**21.** The method as claimed in any of claims 16 to 20, wherein the step (d) comprises:

receiving and temporarily storing sound-effect data stored in a memory; and
decompressing the sound-effect data temporarily stored in a buffer in order to restore to the original sound effect.

**22.** The method as claimed in claim 20 or 21, wherein the sound-effect data is in MPEG Layer-3 (MP3) format.

**23.** The method as claimed in any of claims 16 to 22, wherein the motion is detected by an acceleration sensor, an angular velocity sensor, or a combination thereof.

**24.** The method as claimed in claim 23, wherein the step (c) comprises recognizing the occurrence of motion at a point when the sensor signal exceeds a specified critical value.

**25.** The method as claimed in claim 24, wherein the step (c) further comprises recognizing that only a single motion has occurred if plural points recognized as points of motion are within a specified time period.

**26.** The method as claimed in any of claims 23 to 25, further comprising controlling the playback of the sound effect according to a specified sound-effect-playback setup if motion is recognized.

**27.** The method as claimed in claim 26, wherein the sound-effect-playback setup is conducted such that if motion is recognized during the playback of the sound signal, the sound effect is played, and if motion is recognized during the playback of the sound effect, the sound effect is played again starting from its initial point.

28. The method as claimed in claim 26, wherein the sound-effect-playback setup is conducted such that if motion is recognized during the playback of the sound signal, a sound signal different from the played sound signal is played.

29. The method as claimed in claim 26, wherein the sound-effect-playback setup is conducted such that if motion is recognized during the playback of the sound signal, a corresponding sound signal according to an axes indicated by the motion is played.

30. The method as claimed in any of claims 26 to 29, wherein the sound-effect-playback setup is conducted such that if motion is recognized during the playback of the sound signal, the magnitude of the sound signal increases according to the size of the motion.

31. A computer program comprising computer program code means adapted to perform all of the steps of any of claims 17 to 30 when said program is run on a computer.

32. A computer program as claimed in claim 31 embodied on a computer readable medium.

# FIG. 1

# FIG. 2

| MOTION → | MOTION SENSOR (60) | → | PATTERN RECOGNITION UNIT(80) | → | PLAYBACK CONTROLLER (90) | → | SOUND EFFECT PLAYBACK UNIT(40) |

| MEMORY (15) | MEDIA PLAYBACK UNIT(30) | MIXER (50) | OUTPUT UNIT (55) |

MIXED SOUND

# FIG. 3

# FIG. 4

UPWARD/
DOWNWARD

RIGHT/LEFT

FORWARD/
BACKWARD

100

X-AXIS

CLOCKWISE/
COUNTERCLOCKWISE

Y-AXIS

Z-AXIS

## FIG. 5A

## FIG. 5B

# FIG. 6

# FIG. 7

# FIG. 8

X-AXIS
PATTERN
RECOGNITION

111    112    SOUND EFFECT 1

PLAYBACK POSITION

Z-AXIS
PATTERN
RECOGNITION

113    114    SOUND EFFECT 3

PLAYBACK POSITION

Y-AXIS
PATTERN
RECOGNITION

115    SOUND EFFECT 2

PLAYBACK POSITION

# FIG. 9

ACCELERATION

$a_n$

$a_3$

$a_2$

$a_1$

0

# FIG. 10

START

READ MULTIMEDIA DATA AND PLAY SOUND SIGNAL — S1

DETECT MOTION OF DEVICE AND GENERATE SENSOR SIGNAL CORRESPONDING TO DETECTED MOTION — S2

RECEIVE GENERATED SENSOR SIGNAL AND RECOGNIZE MOTION PATTERN — S3

PLAY SOUND EFFECT BASED ON THE RECOGNIZED MOTION PATTERN — S4

MIX SOUND EFFECT WITH SOUND SIGNAL BEING PLAYED — S5

OUTPUT MIXED SOUND — S6

END

**European Patent Office**

**EUROPEAN SEARCH REPORT**

Application Number

EP 06 25 2817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/045274 A1 (NISHITANI YOSHIKI [JP]) 6 March 2003 (2003-03-06)<br><br>* abstract; figures 1,2,9 *<br>* paragraphs [0045] - [0069], [0099], [0106], [0109] *<br>----- | 1-4, 8-11, 13-26, 28-32 | INV.<br>G10H1/00<br><br>ADD.<br>G10H1/36 |
| X | US 2001/035087 A1 (SUBOTNICK MORTON [US]) 1 November 2001 (2001-11-01)<br><br>* abstract; figures 1-4 *<br>* paragraphs [0016], [0033], [0044], [0048], [0052], [0053] *<br>----- | 1-3, 16-18, 31,32 | |
| P,X | EP 1 631 049 A (SAMSUNG ELECTRONICS CO LTD [KR]) 1 March 2006 (2006-03-01)<br><br>* abstract; claims 1,2; figures 1-3 *<br>----- | 1-3, 16-18, 31,32 | |
| X | US 6 356 185 B1 (PLUGGE JAY STERLING [US] ET AL) 12 March 2002 (2002-03-12)<br><br><br>* column 5, lines 43-65; figures 1,2 *<br>* abstract *<br>----- | 1-3,6,8, 11, 16-18, 20,21, 23,31,32 | TECHNICAL FIELDS SEARCHED (IPC)<br><br>G10H |
| X | US 5 541 358 A (WHEATON JAMES A [US] ET AL) 30 July 1996 (1996-07-30)<br><br>* abstract; figures 3,7 *<br>----- | 1-3, 16-18, 31,32 | |
| A | GB 2 347 593 A (MOTOROLA INC [US]) 6 September 2000 (2000-09-06)<br>* abstract; figures 2-5 *<br>----- | 1-32 | |

The present search report has been drawn up for all claims

| Place of search | Date of completion of the search | Examiner |
|---|---|---|
| Munich | 9 November 2006 | Feron, Marc |

## ANNEX TO THE EUROPEAN SEARCH REPORT
## ON EUROPEAN PATENT APPLICATION NO.

EP 06 25 2817

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2006

| Patent document cited in search report | | Publication date | Patent family member(s) | | Publication date |
|---|---|---|---|---|---|
| US 2003045274 | A1 | 06-03-2003 | JP | 2003076368 A | 14-03-2003 |
| US 2001035087 | A1 | 01-11-2001 | NONE | | |
| EP 1631049 | A | 01-03-2006 | NONE | | |
| US 6356185 | B1 | 12-03-2002 | NONE | | |
| US 5541358 | A | 30-07-1996 | NONE | | |
| GB 2347593 | A | 06-09-2000 | CN | 1259836 A | 12-07-2000 |
| | | | CN | 1516505 A | 28-07-2004 |
| | | | JP | 2000214988 A | 04-08-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11252240 A

- KR 2005049345